# EUROPÄISCHE PATENTANMELDUNG

(11) **EP 2 711 795 A1**
(43) Veröffentlichungstag der Anmeldung: **26.03.2014**
(21) Anmeldenummer: 12185876.5
(22) Anmeldetag: 25.09.2012
(51) Int. Cl.: G05B 19/042

(54) **Verfahren zur Fernbedienung eines Geräts, insbesondere Feldgeräts, und Geräteanordnung**

(71) Anmelder: VEGA Grieshaber KG, 77709 Wolfach (DE)
(72) Erfinder: Schätzle, Ralf, 77716 Fischerbach (DE); Staiger, Holger, 78739 Hardt (DE)
(74) Vertreter: Patentanwälte Westphal, Mussgnug & Partner

(57) **Zusammenfassung**

Verfahren und Geräteanordnung zur Ausführung des Verfahrens, wobei das Verfahren zur Fernbedienung eines Geräts (20), insbesondere Feldgeräts (20), vorgesehen ist und weiterhin zur Ausführung mit einem ersten Gerät (20), insbesondere Feldgerät (20), welches Daten gemäß einem Displayinhalt (62, 64) bereitstellt, insbesondere Bilddaten, einem zweiten Gerät (30), insbesondere Feldgerät (30), welches zur Darstellung eines Displayinhalts (62, 64) gemäß der Daten, insbesondere Bilddaten, geeignet ist und als Terminal agiert, wobei das erste (20) und das zweite (30) Gerät miteinander über eine Kommunikationsverbindung (40) kommunizieren, wobei in einem Bedienschritt zur Fernbedienung des ersten Geräts (20) mittels des zweiten Geräts (30) in einem ersten Schritt eine Bedienaktion (60, 66) am zweiten Gerät (30) vom zweiten Gerät (30) als Befehl (CMD, 68) an das erste Gerät (20) kommuniziert und von diesem ausgeführt wird, in einem zweiten Verfahrensschritt Daten gemäß einem Displayinhalt (64), welcher mit dem ausgeführten Befehl (CMD, 68) korrespondiert, von dem ersten (20) an das zweite (30) Gerät über die Kommunikationsverbindung (40) übertragen werden, in einem dritten Verfahrensschritt am zweiten Gerät (30) die Darstellung des Displayinhalts (64) des ersten Geräts (20) gemäß den übertragenen Daten erfolgt.

## Beschreibung

Die vorliegende Erfindung betrifft ein Verfahren zur Fernbedienung eines Geräts, insbesondere Feldgeräts, gemäß dem Oberbegriff des Anspruchs 1. Des Weiteren betrifft die Erfindung eine Geräteanordnung gemäß dem Oberbegriff von Anspruch 9.

Für Feldgeräte, welche an einem Feldbus angeschlossen sind, siehe z.B. die Druckschrift DE 10 2011 008 941 A1, besteht die Möglichkeit, die Geräte aus der Ferne zu bedienen und damit die Geräte zu parametrieren bzw. die Parameter im Gerät zu verändern. Beispielhaft seien HART-Feldgeräte genannt, die mit einem sogenannten HART-Handheld, z.B. der Firma Emerson, bedient werden können. Damit das Feldgerät aus der Ferne bedient werden kann, muss in dem Handheld eine passende Gerätebeschreibungsdatei (DD (device description), FDD (field device description)) hinterlegt bzw. gespeichert werden. Die Informationen aus dieser Gerätebeschreibungsdatei können dann dazu genutzt werden, das korrespondierende Feldgerät mittels des HART-Handhelds aus der Ferne zu parametrieren.

Alternativ ist es möglich, siehe z.B. die oben angegebene Druckschrift, ein Feldgerät über einen PC, der beispielsweise mittels eines Modems an dem Bussystem angeschlossen ist, zu parametrieren. Dazu ist auf dem PC ein entsprechendes Bedienprogramm mit entsprechendem Gerätetreiber für das Feldgerät nötig (z.B. PACtware™ / DTM, oder ähnliches).

Den obigen Lösungen gemein ist, dass zur Parametrierung entfernter Feldgeräte die Nutzung von Gerätebeschreibungsdateien bzw. Treibern erforderlich ist. Hieraus resultieren neben der allgemeinen Gefahr möglicher Inkompatibilitäten auch Versionsabhängigkeiten, so dass mitunter nur eingeschränkte Bedienmöglichkeiten in Bezug auf das zu parametrierende entfernte Feldgerät bestehen. Daneben ist auch der Hardwareaufwand beachtlich bzw. nachteilig, welcher mit dem Vorhalten einer Speichermöglichkeit für die Gerätebeschreibungsdateien oder Treiber einhergeht.

Ausgehend hiervon liegt der vorliegenden Erfindung die Aufgabe zugrunde, die Nachteile des Standes der Technik zu überwinden und ein Verfahren sowie eine Geräteanordnung anzugeben, mittels derer eine Fernbedienung eines Feldgeräts vereinfacht und der Hardwareaufwand reduziert wird.

Diese Aufgabe wird verfahrensgemäß durch die Merkmale des Anspruchs 1 gelöst, vorrichtungsgemäß durch die Merkmale des Anspruchs 9. Vorteilhafte Weiterbildungen und Ausführungsformen sind in den Unteransprüchen angegeben.

Das erfindungsgemäße Verfahren zur Fernbedienung eines Geräts, insbesondere Feldgeräts, zur Ausführung mit einem ersten Gerät, insbesondere Feldgerät, welches Daten gemäß einem Displayinhalt bereitstellt, insbesondere Bilddaten, und einem zweiten Gerät, insbesondere Feldgerät, welches zur Darstellung eines Displayinhalts gemäß der Daten, insbesondere Bilddaten, ausgebildet ist und als Terminal agiert, wobei das erste und das zweite Gerät miteinander über eine Kommunikationsverbindung kommunizieren, zeichnet sich dadurch aus, dass in einem Bedienschritt zur Fernbedienung des ersten Geräts mittels des zweiten Geräts in einem ersten Verfahrensschritt eine Bedienaktion am zweiten Gerät vom zweiten Gerät als Befehl an das erste Gerät kommuniziert und von diesem ausgeführt wird; in einem zweiten Verfahrensschritt Daten gemäß einem Displayinhalt, welcher mit dem ausgeführten Befehl korrespondiert, von dem ersten an das zweite Gerät über die Kommunikationsverbindung übertragen werden; und in einem dritten Verfahrensschritt am zweiten Gerät die Darstellung des Displayinhalts des ersten Geräts gemäß den übertragenen Daten erfolgt.

Vorgesehen ist hierbei, die Verfahrensschritte eins bis drei im Rahmen der Fernbedienung des ersten Geräts mittels des zweiten Geräts wiederholt auszuführen. Derart werden auch umfangreichere Bedienabfolgen, z.B. menügeführte Bedienschrittfolgen, vorteilhaft einfach für insbesondere eine Parametrierung ermöglicht.

Mittels des vorgeschlagenen Verfahrens gelingt es, das erste Gerät, welches z.B. ein Sensor bzw. Messumformer ist, insbesondere mit einer (Vor Ort-) Anzeige-/Bedieneinheit, mittels des zweiten Geräts, welches z.B. eine (externe) Anzeige-/Bedieneinheit für einen Sensor ist, fernzubedienen, ohne am zweiten Gerät eine spezielle Gerätebeschreibungsdatei oder einen Gerätetreiber für das erste Gerät zu benötigen. Dies ermöglicht beispielsweise in einem (Feld-)Bussystem vorteilhaft, gleichartige Feldgeräte auch wechselseitig über jeweils das andere parametrieren zu können. Auch können bei geeigneter Adressierung, i.e. mittels eines einfachen Befehlssatzes, z.B. mehrere erste (Feld-)Geräte ausgehend von einem einzigen zweiten (Feld-)Gerät fernbedient, insbesondere parametriert, werden.

Durch die Übertragung des Displayinhalts bzw. mit einem solchen korrespondierender Daten vom ersten an das zweite Gerät wird weiterhin die Möglichkeit eröffnet, einem Bediener am zweiten Gerät die zur Bedienung des ersten Geräts notwendigen Displayinhalte, insbesondere Grafiken, tabellarische oder numerische Anzeigen, Eingabemasken, Bedienmenüs, allgemein die Bedienoberfläche des ersten Geräts zu visualisieren, ohne die Bedienoberfläche desselben wie im Stand der Technik über eine gerätespezifische Gerätebeschreibungsdatei am zweiten Gerät darstellen lassen zu müssen. Versionsabhängigkeiten werden insoweit aufgelöst. Daneben wird im Stand der Technik erforderlicher Gerätespeicher für Treiber oder Gerätebeschreibungsdateien am zweiten Gerät vorteilhaft entbehrlich. Durch das vorgeschlagene Verfahren können einem Bediener sämtliche Bedienfunktionen wie vor Ort am ersten Gerät am zweiten Gerät zur Verfügung gestellt werden, insbesondere auf einfache Weise dann, wenn das erste und zweite Gerät über gleichartige, bevorzugt identische Eingabemittel und weiterhin bevorzugt über einen gemeinsamen Befehlsvorrat zur Durchführung des Verfahrens verfügen.

Bevorzugt wird bei dem Verfahren in einem jeweiligen Bedienschritt stets der (gesamte) am ersten Gerät angezeigte oder generierte Bildschirm- bzw. Displayinhalt an das zweite Gerät übertragen, i.e. im zweiten Schritt des Verfahrens. Durch insbesondere genaue Wiedergabe des Displayinhalts des ersten Geräts am zweiten Gerät, i.e. im dritten Schritt, kann ein Nutzer eine Eingabe oder allgemein eine Bedienaktion basierend auf dem dargestellten Displayinhalt am zweiten Gerät vornehmen bzw. ausführen, welche im Rahmen des vorgeschlagenen Verfahrens zu einer korrespondierenden Befehlsausführung am ersten Gerät führt, i.e. durch Übertragung eines entsprechend generierten Befehls vom zweiten an das erste Gerät.

Für die Fernbedienung des ersten bzw. Interaktion des ersten und zweiten Geräts ist verfahrensgemäß, wie oben bereits angemerkt, ein gemeinsamer Befehlssatz vorgesehen, z.B. herstellerspezifische HART-Kommandos, welcher von den Geräten genutzt wird. Mittels der Befehle des spezifischen Befehlssatzes können die Bedienaktionen im ersten Schritt als auch die Daten gemäß dem Displayinhalt übertragen werden. Bei dem Verfahren reagiert hiernach das erste Gerät auf einen vom zweiten Gerät übermittelten bzw. kommunizierten Befehl derart, als wäre der Befehl bzw. die Bedienaktion am ersten Gerät unmittelbar veranlasst worden, z.B. an einer Anzeige-/Bedieneinheit desselben.

Im Rahmen des vorgeschlagenen Verfahrens ist es weiterhin nicht erforderlich, dass das erste Gerät tatsächlich über ein Display verfügt. Es ist für die Ausführung des Verfahrens hinreichend, dass das erste Gerät mit dem ausgeführten Befehl korrespondierende Daten gemäß einem Displayinhalt bereitstellt, i.e. darstellbare Bildinformation. Erfindungsgemäß sind die übertragenen Daten gemäß dem Displayinhalt bevorzugt Pixeldaten, allgemein auch Videospeicherdaten, d.h. Daten aus einem Videospeicher des ersten Geräts.

Von der Begrifflichkeit Daten gemäß dem Displayinhalt können im Rahmen der Erfindung auch Daten mitumfasst sein, welche bei Wiederholung der Verfahrensschrittfolge lediglich die Änderungen an zuvor bereits übermittelten Displayinhalten repräsentieren. Es kann also vorteilhaft genügen, bei einer erneuten Ausführung des zweiten Schritts lediglich Daten gemäß einem Displayinhalt zu übertragen, welche die Änderungen im Displayinhalt (gegenüber einem bereits in einem vorherigen dritten Schritt dargestellten Displayinhalt bzw. gegenüber im zweiten Schritt übermittelten Daten) repräsentieren. Wie bereits erwähnt, wird mittels der übertragenen Daten bevorzugt eine genaue Wiedergabe des Displayinhalts des ersten Geräts am zweiten Gerät gewährleistet. Im Rahmen der Übertragung der Daten kann nötigenfalls Information an das zweite Gerät mitübertragen werden, welche Displayeigenschaften des ersten Geräts zum Inhalt hat, i.e. Aufbau, Auflösung, etc.

Bei einer Ausgestaltung des Verfahrens ist vorgesehen, dass die Daten gemäß dem Displayinhalt im zweiten Schritt vom zweiten Gerät angefordert werden, insbesondere nach Bestätigung des ersten Geräts an das zweite Gerät, den im ersten Schritt kommunizierten Befehl ausgeführt zu haben. Somit wird auf einfache Weise eine Datenflusssteuerung ermöglicht. Alternativ kann in einem Kommunikationsprotokoll vorgesehen sein, dass das erste Gerät die Daten nach Ausführung des Befehls, i.e. im ersten Schritt, selbsttätig an das zweite Gerät übermittelt, i.e. im zweiten Schritt, z.B. nach Übermittlung eines Pilotsignals.

Das vorgeschlagene Verfahren wird bevorzugt zur Parametrierung verwendet, d.h. zur Remote-Parametrierung des ersten Geräts. Zur Parametrierung wird über eine Bedienaktion bzw. den korrespondierenden Befehl im ersten Schritt bevorzugt ein Bedienmenü aufgerufen oder ein Menüpunkt bzw. -eintrag selektiert und/oder allgemein eine Parametriereingabe vorgenommen. Das erste Gerät ist im Rahmen der Erfindung bevorzugt ein Sensor, insbesondere ein Durchfluss-, Grenzstand-, Druck-, Füllstands- oder Dichtemessumformer bzw. -sensor, insbesondere mit einer (Vor Ort-)Anzeige-/Bedieneinheit, alternativ z.B. ein Aktor, weiterhin bevorzugt ein Füllstandssensor, insbesondere mit einer (Vor Ort-) Anzeige-/Bedieneinheit.

Vorgeschlagen wird erfindungsgemäß auch eine Geräteanordnung mit einem ersten Gerät, insbesondere Feldgerät, und einem zweiten Gerät, insbesondere Feldgerät, welch letzteres weiterhin insbesondere als Terminal agiert, wobei die Geräteanordnung zur Durchführung des vorstehend beschriebenen Verfahrens ausgebildet ist.

Bei einer vorteilhaft einfachen Ausgestaltung der Geräteanordnung sind das erste und das zweite Gerät je Feldgeräte, welche je insbesondere über eine Anzeige-/Bedieneinheit verfügen, welche zur Durchführung des Verfahrens nutzbar ist. Hierbei ist das erste Gerät insbesondere ein Sensor, insbesondere ein Füllstandsensor mit einer (Vor Ort-) Anzeige-/Bedieneinheit, das zweite Gerät bevorzugt eine Anzeige-/Bedieneinheit für einen Sensor, insbesondere einen Füllstandsensor. Bei weiteren bevorzugten Ausgestaltungen kann das zweite Gerät ein PC, insbesondere mit einem Bedientool, z.B. ein Mobiltelefon / Smartphone, ein Laptop oder ein Handheld bzw. mobiles Terminal sein, allgemein z.B. eine Bedieneinrichtung mit Display. Bei einer bevorzugten Ausführungsform weisen das erste und zweite Gerät gleichartige, insbesondere identische Anzeige-/ Bedieneinheiten auf, welche zur Nutzung mit dem Verfahren vorgesehen sind.

Die Kommunikationsverbindung kann im Rahmen der vorliegenden Erfindung drahtgebunden, insbesondere mittels eines Feldbusses, oder drahtlos, insbesondere mittels eines drahtlosen Feldbusses realisiert sein. Als Feldbus kann z.B. ein HART-Bus, ein PROFIBUS, FF oder ein davon verschiedenes Bussystem dienen, als drahtloser Feldbus z.B. wirelessHART oder ähnlihches. Es gilt anzumerken, dass die Erfindung jedoch auch von weiteren Kommunikationstechnologien für die Kommunikationsverbindung Gebrauch machen kann, z.B. Ethernet, USB, Funk, WLAN, GSM, etc.. Ein Bussystem ist insoweit nicht zwingend erforderlich.

Bevorzugt wird die Geräteanordnung oder das Verfahren mit einer Füllstandsüberwachung verwendet. Hierbei ist das erste Gerät bzw. Feldgerät bevorzugt ein Füllstandssensor, insbesondere mit einer (Vor Ort) Anzeige-/Bedieneinheit. Im Rahmen der Füllstandsüberwachung sind die Feldgeräte hierbei weiterhin bevorzugt über einen Feldbus in Kommunikationsverbindung, insbesondere über einen HART-Feldbus.

Im Hinblick auf die Geräteanordnung sei ergänzend auf die Beschreibung des Verfahrens verwiesen, welche gleichermaßen für die Geräteanordnung zur Geltung gelangen kann.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnungen näher erläutert. Es zeigen:
- Fig. 1: exemplarisch und schematisch eine Geräteanordnung zur Ausführung des erfindungsgemäßen Verfahrens gemäß einer möglichen Ausführungsform der Erfindung;
- Fig. 2: exemplarisch und schematisch ein Diagramm zur Veranschaulichung des Verfahrens gemäß einer möglichen Ausführungsform der Erfindung.

In der nachfolgenden Beschreibung und den Zeichnungen entsprechen gleichen Bezugszeichen Elemente gleicher oder vergleichbarer Funktion.

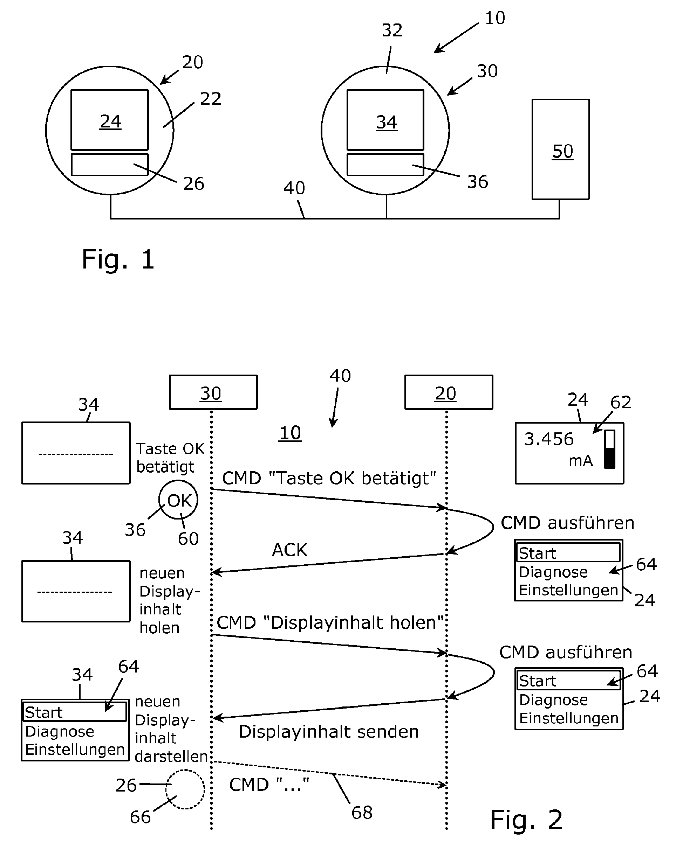

Die Fig. 1 zeigt eine Geräteanordnung 10 mit einem ersten Gerät bzw. Feldgerät 20, welches als Sensor mit einer (Vorort-) Anzeige-/Bedieneinheit 22 insbesondere zur Füllstandsmessung ausgestaltet ist. Über die Anzeige-/Bedieneinheit 22 ist eine Parametrierung des Sensors 20 ermöglicht, wozu die Anzeige-/Bedieneinheit 22 ein Display 24 und eine Bedieneinheit bzw. Bedienelemente 26 zur Interaktion mit einem Nutzer aufweist. Mittels des Displays 24 sind Bedienoberflächen insbesondere zur Parametrierung des Füllstandsensors 20 darstellbar, wobei die Displayinhalte gemäß einer jeweiligen über die Bedienelemente 26 veranlassten Bedienaktion aufgerufen werden. Auszugebende Displayinhalte werden im Gerät 20 von einer Grafikhardware erzeugt, insbesondere als Rastergrafik, und in einem Videospeicher abgelegt. Der Videospeicher ist hierbei als separater Speicher im Gerät 20 bereitgestellt, alternativ kann dieser auch Teil eines Hauptspeichers des Geräts 20 sein.

Wie aus Fig. 1 ersichtlich ist, weist die Geräteanordnung 10 weiterhin ein zweites Gerät bzw. Feldgerät 30 auf, welches als Anzeige-/Bedieneinheit bzw. -gerät 32 gebildet und von dem ersten Feldgerät 20 räumlich entfernt ist. Das Anzeige-/Bediengerät 32 verfügt wie das Feldgerät 20 über ein Display 34 und eine Bedieneinheit bzw. Bedienelemente 36. Mittels des Displays 34, welches gleichsam, insbesondere identisch zu jenem 24 des ersten Feldgeräts 20 ausgestaltet ist, sind Displayinhalte gemäß einer jeweiligen über die Bedieneinheit 36, welche ebenfalls gleichsam, insbesondere identisch zu jener 26 des ersten Feldgeräts 20 ausgestaltet ist, veranlassten Bedienaktion aufrufbar. Wie vor für das Feldgerät 20 werden auch im Feldgerät 30 auszugebende Displayinhalte von einer Grafikhardware erzeugt, insbesondere als Rastergrafik, und in einem Videospeicher des Geräts 30 abgelegt.

Über eine bidirektionale Kommunikationsverbindung 40, welche mittels eines HART-Feldbusses realisiert ist, ist dem ersten Feldgerät 20 weiterhin eine Kommunikation mit dem zweiten Feldgerät 30 ermöglicht. Über die Busleitung 40 werden die Feldgeräte 20, 30, insoweit HART-Feldgeräte, ferner ausgehend von einer Versorgungseinrichtung 50 versorgt.

Um den Sensor 20 mittels des erfindungsgemäßen Verfahrens, welches nachfolgend anhand von Fig. 2 näher erläutert ist, fernzubedienen, insbesondere aus der Ferne zu parametrieren, agiert das zweite Feldgerät 30 im Rahmen der Fernbedienung als Terminal, d.h. dieses ist für eine jeweilige Nutzerinteraktion bereitgestellt bzw. vorgesehen. Angemerkt sei noch, dass links in Fig. 2 Merkmale des Verfahrens in Bezug auf das zweite Feldgerät 30 veranschaulicht sind, rechts solche im Hinblick auf das erste Feldgerät 20 und mittig verfahrensgemäße Kommunikationsmerkmale.

Bei dem Verfahren wird im Zuge einer Nutzerinteraktion 60 mit dem zweiten Gerät 30, beispielhaft auf die Betätigung einer Taste "OK" an der Bedieneinheit 36 hin, nämlich im ersten Schritt, die getätigte Bedienaktion 60 am zweiten Gerät 30 vom zweiten Gerät 30 als Befehl (CMD "Taste OK betätigt") an das erste Gerät 20 kommuniziert, d.h. vorliegend wird der Befehl an das erste Gerät 20 über die Kommunikationsverbindung 40 kommuniziert bzw. übermittelt, gemäß einer Betätigung der Taste "OK" zu (re)agieren, welcher nachfolgend vom ersten Feldgerät 20 ausgeführt wird (CMD ausführen). Aufgrund der Befehlsausführung wechselt das erste Feldgerät 20 in dem geschilderten Beispiel von einer Messwertanzeige, Bezugszeichen 62, in ein Parametriermenü 64.

In einem zweiten Verfahrensschritt bestätigt das erste Feldgerät 20 dem zweiten Feldgerät 30 zunächst, den kommunizierten Befehl, nämlich "Taste OK betätigt", ausgeführt zu haben, wozu dieses ein Acknowledge-Signal (ACK) über die Kommunikationsverbindung 40 an das zweite Gerät 30 übermittelt.

Nach Empfang des ACK-Signals fordert das zweite Gerät 30 im zweiten Verfahrensschritt nunmehr die Daten gemäß dem neuen Displayinhalt (Parametriermenü 64) des ersten Geräts 20 an, wozu das zweite Gerät 30 einen korrespondierenden Befehl, nämlich CMD "Displayinhalt holen" an das erste Gerät 20 kommuniziert. Im Zuge der Ausführung des Befehls "Displayinhalt holen" werden nunmehr die Daten, insbesondere Pixeldaten, gemäß dem Displayinhalt, vorliegend Parametriermenü 64, welcher mit dem ausgeführten Befehl "Taste OK betätigt" korrespondiert, aus dem Videospeicher des ersten Geräts 20 ausgelesen und von dem ersten 20 an das zweite Gerät 30 über die Kommunikationsverbindung 40 übertragen.

Basierend auf den übertragenen Pixeldaten stellt das zweite Gerät 30 in einem dritten Verfahrensschritt den Displayinhalt 64 des ersten Geräts 20 auf seinem eigenen Display 34 dar, so dass einem Nutzer das aufgerufene Parametriermenü 64 des ersten Geräts 20 am zweiten Gerät 30 visualisiert werden kann.

Insbesondere im Zuge einer mehrfachen Wiederholung der erfindungsgemäßen Verfahrensschritte kann ein Nutzer, basierend auf den durch den je übermittelten Displayinhalt erhaltenen Informationen, über geeignete weitere Interaktion, angedeutet bei Bezugszeichen 66, mit dem zweiten Gerät 30 und korrespondierend an das erste Gerät 20 kommunizierter Befehle, angedeutet bei Bezugszeichen 68, sowie basierend auf der damit einhergehenden Übermittlung und Darstellung der jeweiligen Displayinhalte an das bzw. an dem zweiten Gerät 30 das Remote-Gerät 20 parametrieren, insbesondere Menüeinträge im Parametriermenü selektieren bzw. allgemein Eingaben vornehmen.

Zur Fernbedienung sind hierbei in beiden Feldgeräten 20, 30 geeignete HART-Kommandos (CMD) hinterlegt, welche den Datenaustausch in der aufgezeigten Weise ermöglichen. Angemerkt sei abschließend, dass durch geeignete Adressierung erster Geräte 20 mittels der Erfindung weiterhin auch mehrere erste Feldgeräte 20 der beschriebenen Art durch ein einziges zweites Feldgerät 30 vorteilhaft einfach fernbedient werden können.

## Patentansprüche

1. Verfahren zur Fernbedienung eines Geräts (20), insbesondere Feldgeräts (20), zur Ausführung mit
einem ersten Gerät (20), insbesondere Feldgerät (20), welches Daten gemäß einem Displayinhalt (62, 64) bereitstellt, insbesondere Bilddaten,
einem zweiten Gerät (30), insbesondere Feldgerät (30), welches zur Darstellung eines Displayinhalts (62, 64) gemäß der Daten, insbesondere Bilddaten, geeignet ist und als Terminal agiert,
wobei das erste (20) und das zweite (30) Gerät miteinander über eine Kommunikationsverbindung (40) kommunizieren,
**dadurch gekennzeichnet, dass** in einem Bedienschritt zur Fernbedienung des ersten Geräts (20) mittels des zweiten Geräts (30)
- in einem ersten Schritt eine Bedienaktion (60, 66) am zweiten Gerät (30) vom zweiten Gerät (30) als Befehl (CMD, 68) an das erste Gerät (20) kommuniziert und von diesem ausgeführt wird,
- in einem zweiten Verfahrensschritt Daten gemäß einem Displayinhalt (64), welcher mit dem ausgeführten Befehl (CMD, 68) korrespondiert, von dem ersten (20) an das zweite (30) Gerät über die Kommunikationsverbindung (40) übertragen werden;
- in einem dritten Verfahrensschritt am zweiten Gerät (30) die Darstellung des Displayinhalts (64) des ersten Geräts (20) gemäß den übertragenen Daten erfolgt.

2. Verfahren nach Anspruch 1,
**dadurch gekennzeichnet, dass** die Schrittfolge im Rahmen der Fernbedienung des ersten Geräts (20) mittels des zweiten Geräts (30) wiederholt ausgeführt wird.

3. Verfahren nach einem der vorhergehenden Ansprüche,
**dadurch gekennzeichnet, dass** die Bedienaktion (60, 66) eine Nutzereingabe ist.

4. Verfahren nach einem der vorhergehenden Ansprüche,
**dadurch gekennzeichnet, dass** die Daten gemäß dem Displayinhalt (64) im zweiten Schritt vom zweiten Gerät (30) angefordert werden, insbesondere nach Bestätigung des ersten Geräts (20) an das zweite Gerät (30), den im ersten Schritt kommunizierten Befehl (CMD) ausgeführt zu haben.

5. Verfahren nach einem der vorhergehenden Ansprüche,
**dadurch gekennzeichnet, dass** die Daten gemäß dem Displayinhalt (62, 64) Pixeldaten und/oder Videospeicher-Daten sind.

6. Verfahren nach einem der vorhergehenden Ansprüche,
**dadurch gekennzeichnet, dass** in einem ersten Schritt mittels eines kommunizierten Befehls (CMD) ein Bedienmenü (64) am ersten Gerät (20) aufgerufen oder ein Menüeintrag selektiert wird.

7. Verfahren nach einem der vorhergehenden Ansprüche,
**dadurch gekennzeichnet, dass** das erste (20) und das zweite (30) Gerät einen gemeinsamen Befehlsvorrat nutzen, mittels welchem eine Eingabe (60, 66) am zweiten Gerät im ersten Schritt eine Bedienaktion am ersten Gerät (20) bewirkt und/oder im zweiten Schritt ein Displayinhalt (64) des ersten Geräts (20) an das zweite Gerät (30) übertragen wird.

8. Verfahren nach einem der vorhergehenden Ansprüche,
**dadurch gekennzeichnet, dass** das Verfahren zur Parametrierung des ersten Geräts (20) durch das zweite Gerät (30) ausgeführt wird, insbesondere zur Parametrierung eines Sensors (20).

9. Geräteanordnung (10) mit einem ersten Gerät (20), insbesondere Feldgerät (20), und einem zweiten Gerät (30), insbesondere Feldgerät (30), welches weiterhin insbesondere als Terminal agiert, wobei die Geräte (20, 30) über eine Kommunikationsverbindung (40) der Geräteanordnung (10) miteinander kommunizieren,
**dadurch gekennzeichnet, dass** die Geräteanordnung (10) zur Durchführung des Verfahrens nach einem der vorhergehenden Ansprüche ausgebildet ist.

10. Geräteanordnung (10) nach Anspruch 9 oder Verfahren nach einem der Ansprüche 1 bis 8,
**dadurch gekennzeichnet, dass** das erste Gerät (20) ein Sensor, insbesondere ein Druck-, Füllstands-, Grenzstands-, Dichte- oder Durchflussmessumformer ist, insbesondere mit einer (Vor-Ort-)Anzeige-/Bedieneinheit (22).

11. Geräteanordnung (10) nach einem der Ansprüche 9 und 10 oder Verfahren nach einem der Ansprüche 1 bis 8,
**dadurch gekennzeichnet, dass** das zweite Gerät (30) ein PC oder ein Anzeige-/Bediengerät (32), insbesondere für einen Sensor (20), ein Mobiltelefon, insbesondere Smartphone, Laptop oder Handheld-Gerät ist.

12. Geräteanordnung (10) nach einem der Ansprüche 9 bis 11 oder Verfahren nach einem der Ansprüche 1 bis 8,
**dadurch gekennzeichnet, dass** die Kommunikationsverbindung (40) drahtgebunden, insbesondere mittels eines Feldbusses, oder drahtlos, insbesondere mittels eines drahtlosen Feldbusses realisiert ist.

13. Geräteanordnung (10) nach einem der Ansprüche 9 bis 12 oder Verfahren nach einem der Ansprüche 1 bis 8,
**dadurch gekennzeichnet, dass** das erste (20) und das zweite (30) Gerät je eine Anzeige-/Bedieneinrichtung (22, 32) zur Durchführung des Verfahrens aufweisen, insbesondere gleichartige oder identische Anzeige-/ Bedieneinheiten.

14. Geräteanordnung (10) nach einem der Ansprüche 10 bis 13 oder Verfahren nach einem der Ansprüche 1 bis 9, **gekennzeichnet durch** Verwendung mit einer Füllstandsüberwachung.
